# EUROPEAN PATENT SPECIFICATION

(11) **EP 3 357 596 B1**
(45) Date of publication and mention of the grant of the patent: **24.03.2021**
(21) Application number: 18155408.0
(22) Date of filing: 06.02.2018
(51) Int. Cl.: B21C 51/00, G06K 19/06

(54) **METHOD, SYSTEM AND COMPUTER PROGRAM FOR DETECTING PRINTED ELEMENTS ON IRON AND STEEL PRODUCTS**
VERFAHREN, SYSTEM UND COMPUTERPROGRAMM ZUR ERKENNUNG VON DRUCKELEMENTEN AUF EISEN- UND STAHLPRODUKTEN
PROCÉDÉ, SYSTÈME ET PROGRAMME D'ORDINATEUR POUR LA DÉTECTION D'ÉLÉMENTS IMPRIMÉS SUR DES PRODUITS DE FER ET D'ACIER

(30) Priority: 07.02.2017 ES 201730145
(43) Date of publication of application: 08.08.2018
(73) Proprietor: Fundación Tecnalia Research & Innovation, 20009 Donostia-San Sebastian, Guipuzcoa (ES)
(72) Inventor: GUTIÉRREZ OLABARRIA, José Ángel, San Sebastián 20009 (ES)
(74) Representative: Balder IP Law, S.L.

(56) References cited:
- EP-A2- 0 005 134
- JP-A- S5 773 473
- JP-A- 2013 228 329
- JP-B2- 5 521 245

## Description

### FIELD OF THE INVENTION

The present invention falls within the field of inspection of iron and steel products. More specifically, the invention falls within the field of detection and reading, both hot and cold, of printed elements on iron and steel products hidden by residue.

### BACKGROUND OF THE INVENTION

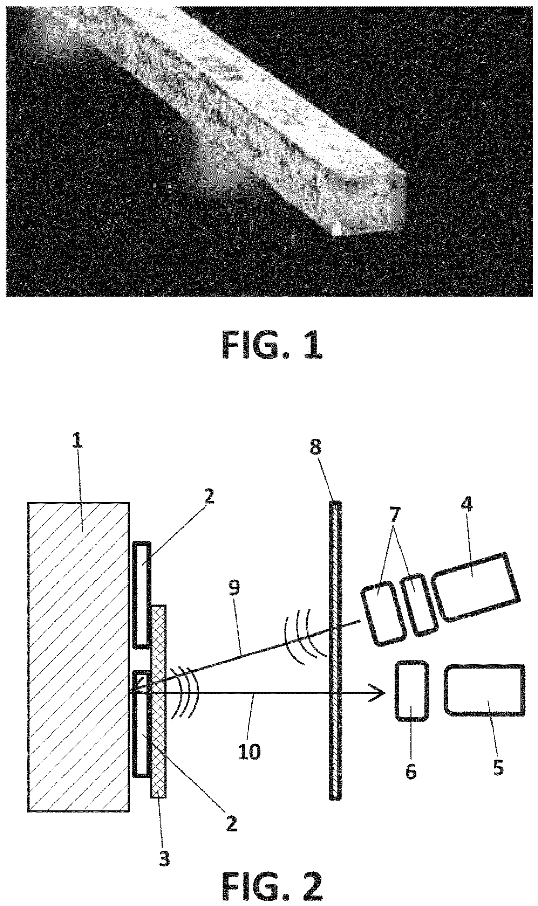

One of the most complex problems to solve in the world of steel and iron, both for tracking and controlling defects in pieces, is that due to the thermal treatments on the surface of the product or to other circumstances, scales or other residues appear on the surface of the product which partially or completely conceals the surface of the product. By way of example, figure 1 shows a picture of a billet with scale on the surface thereof. Specifically, for tracking systems that use markings or paint and character, barcode or data matrix readers, the scale can make the tracking information illegible. Removing this residue sometimes requires procedures that are more expensive than merely carrying out a control of the same, and can alter the metallurgical properties of the material.

Spanish patent ES2378602B1 describes a device for capturing and processing images for profiles of revolution of hot surfaces which uses light sources that emit light at a different wavelength than the light emitted by the surface being inspected. Specifically, it proposes using wavelengths in the green (532 nm), blue (473 nm) or violet (405 nm) spectra. The device uses three systems, each one made up of at least two linear light sources and a linear CCD camera. The three systems must be situated on planes that form an angle with respect to the normal of the surface being inspected and must be distributed in a circumference at 120° from one another. Thus, linear inspection of tubes or other hot revolution surfaces (700 - 1000 °C) is enabled without the emission of the steel itself interfering with the image quality, which is not possible with conventional cameras. However, it has been observed that although this device is useful for classifying defects in pieces and for reading tracking elements, the device is not able to interpret characters printed on the surface or defects if they are concealed by residues. Japanese patent application JP S57 73473 A discloses a method for discriminating a mark, such as dirt, from a mark made on purpose, with paint, on a product. In order to make this discrimination, the paint includes fluorescent powder, such that, when illuminated by a suitable light source, the mark can be identified.

In recent years new technologies have been developed based on terahertz radiation (THz), also known as sub-millimeter radiation, which refers to electromagnetic radiations with frequencies between the high frequency end of the microwave band (300 gigahertz = 300 GHz = 3x10¹¹ Hz) and the long wavelength end of far infrared light (3000 GHz). In these wavelengths, this range corresponds to 0.1 mm in infrared and up to 1.00 mm in microwaves. The terahertz waves are at the farthest end from the infrared band, just before the beginning of the microwave band. They are considered safe radiation since they are not ionizing.

Technologies based on terahertz radiation are being used to develop new techniques for inspecting surfaces and detecting defects in the same. For example, Japanese patent application JP2013228329A relates to a device and method for surface inspection based on the emission of waves in the THz band and on the detection of the intensity distribution of the THz wave that is reflected off the surface being inspected. A device detects defects on the surface based on said intensity distribution of the THz wave. However, as in the case of ES2378602B1, the device and method are not designed to read the characters printed on the surface and concealed by residues, but rather to see differences in the reflection off the background.

Recently, an experiment was carried out based on terahertz technology in which concealed textual content (one letter per page) was extracted from several stacked pages (Redo-Sanchez, A. et al. Terahertz time-gated spectral imaging for content extraction through layered structures. Nat. Commun. 7:12665 doi: 101038/ncomms12665 (2016)).

However, the aforementioned proposal was designed for reading ink on paper sheets, and therefore the objective thereof is to penetrate layers of dielectric material that have printed elements. Therefore, this proposal does not allow for a direct application thereof for detecting characters that have been painted on a metal background and which are concealed by a material such as scale in extreme inspection conditions (high heat, dirt, a moving element to be inspected, etc.).

Therefore, it is necessary to develop a detection and reading method for hot-printed characters on iron and steel products and covered by residues, such as scales, which allows for these characters to be interpreted both in hot and cold temperatures.

### DESCRIPTION OF THE INVENTION

The present invention provides a method for detecting elements or marks, such as letters, symbols, codes or identification characters, created for the subsequent identification of the iron or steel product, completely or partially concealed by undesirable elements, such as scale, grease, stains, etc. The method is based on the emission of a source of radiation in the terahertz band that penetrates (passes through) the layer of undesirable material (dielectric material) that conceals the mark, and on the detection of the differences in the reflection between the paint (semi-dielectric material) and the metal background (iron or steel product formed by a conductor material). This way, the information reflected off the concealed layer is detected, that is to say, the mark traced on the surface of the product. The marks that are intentionally created can be traced with paint, including paints designed to be able to be used in high temperatures.

In a first aspect of the invention, a method for detecting an element traced on a surface of an iron or steel product by means of applying a paint is provided, wherein said element has been covered, at least partially, by a residue that prevents a human reading, or a reading by conventional artificial vision of said element. The method comprises: applying a radiation in the terahertz band to said surface of an iron or steel product that has an element traced with paint concealed behind a residue, wherein said radiation is emitted by at least one source of radiation in the terahertz band, such that said radiation penetrates passes through) said residue; detecting a radiation in the terahertz band reflected by the surface of said iron or steel product covered by said residue, wherein said reflected radiation is detected by at least one terahertz radiation detector, obtaining at least one signal reflected off said surface of an iron or steel product and at least one signal reflected off said traced element on said surface; processing said reflected signals, analyzing the differences between said at least one signal reflected off said surface of an iron or steel product and said at least one signal reflected off said element traced on said surface, and applying enhancement filters and character recognition techniques, such that the element traced on said surface and covered at least partially by a residue is reconstructed.

In embodiments of the invention, at least one detector of said one or more detectors is arranged normal to the surface of said iron or steel product and at least one source of said one or more sources is arranged forming an angle between 5° and 30° in relation to said normal to the surface of said iron or steel product.

In embodiments of the invention, the element is traced on the iron or steel product while hot. In these embodiments, the source or sources and the detector or detectors are preferably protected by thermal protection means.

In embodiments of the invention, the iron or steel product is a piece of steel.

In embodiments of the invention, the element is one or more characters, symbols, codes or drawings.

In embodiments of the invention, the residue comprises carbon oxide.

In embodiments of the invention, the paint with which the element is traced on the surface of an iron or steel product is a paint doped with at least one dopant that does not change the visible properties or the operation of said paint, but does change its level of absorption, transmission and reflection in the terahertz band with respect to the respective levels of absorption, transmission and reflection in the terahertz band of the surface of the iron or steel product and those of said residue. In embodiments of the invention at least one dopant is metal. The metal dopant preferably comprises iron.

In embodiments of the invention, an identification method for iron and steel products is provided that comprises: tracing an identification element by means of applying a paint on a surface of an iron or steel product; and detecting said identification element once it has been covered at least partially by a residue, by means of applying the previously described method.

In a second aspect of the invention, a system for detecting an element traced on a surface of an iron or steel product by means of applying a paint is provided, wherein said element has been covered, at least partially, by a residue. The system comprises: at least a source of radiation in the terahertz band configured to apply a radiation in the terahertz band to said surface of an iron or steel product that has an element traced with paint that is concealed behind a residue; at least a terahertz radiation detector configured to detect radiation in the terahertz band reflected by said surface of an iron or steel product covered by said residue, obtaining at least one signal reflected off said surface of an iron or steel product and at least one signal reflected off said traced element on said surface; means for processing said reflected signals, analyzing the differences between said at least one signal reflected off said surface of an iron or steel product and said at least one signal reflected off said element traced on said surface, and applying enhancement filters and character recognition techniques, such that the element traced on said surface is reconstructed.

In embodiments of the invention, at least one detector of said one or more detectors is arranged normal to the surface of said iron or steel product and at least one source of said one or more sources is arranged forming an angle between 5° and 30° with respect to said normal to the surface of said iron or steel product.

In embodiments of the invention, the system further comprises thermal protection means to protect at least one source of said one or more sources and at least one detector of said one or more detectors.

In embodiments of the invention, the system further comprises one lens arranged in front of at least one of said one or more detectors.

In embodiments of the invention, the system further comprises optical conditioning units in front of at least one source of said one or more sources.

In embodiments of the invention, the paint with which said element is traced on the surface of an iron or steel product is a paint doped with at least one dopant that does not change the visible properties or the operation of said paint, but which does change its level of absorption, transmission and reflection in the terahertz band with respect to the respective levels of absorption, transmission and reflection in the terahertz band of the surface of the iron or steel product and those of said residue. In embodiments of the invention at least one dopant is metal. The metal dopant preferably comprises iron.

In a second aspect of the invention, a system for carrying out the aforementioned method is provided.

Further advantages and characteristics of the invention will become apparent from the detailed description which follows and will be specifically indicated in the attached claims.

### BRIEF DESCRIPTION OF THE FIGURES

As a complement to the description, and for the purpose of helping to make the characteristics of the invention more readily understandable, in accordance with a practical embodiment thereof, said description is accompanied by a set of figures constituting an integral part thereof, which by way of illustration and not limitation represent the following:
Figure 1 shows an example of a piece with scale on the surface thereof. Specifically it is a billet with scale on the surface thereof.
Figure 2 shows a diagram of the implementation of the method according to a possible embodiment of the invention.
Figures 3A-3C show an example of the detection process according to a possible embodiment of the invention.

### DESCRIPTION OF AN EMBODIMENT OF THE INVENTION

Figure 2 shows a diagram of the execution of the method according to a possible embodiment of the invention by means of a system according to a possible embodiment of the invention. An iron or steel product 1 is schematically shown, on which one or more marks 2 are traced in hot temperatures. Figure 2 shows two marks by way of example. The iron or steel product 1 is, for example, a piece of steel obtained by means of a steelmaking process. Non-limiting examples of materials from which iron and steel products are produced are: iron, carbon and different alloys and ferrum. Throughout this text, the expressions "hot" or "high temperatures" refer to surface temperatures of the product being treated (in this case, the product 1) greater than 500 ºC, typically in the range of 900 ºC-1200 ºC, immediately after coming out of the furnace or immediately after being rolled. The marks 2 are preferably characters, symbols or optical codes (such as a data matrix or a barcode) made with paint. Although a single iron or steel product 1 is shown in figure 2, the marks 2 are usually traced, painted or printed in series as the iron and steel products 1 are being produced and moving along a production line.

The marks 2 of figure 2 are preferably made with special paint that can withstand high temperatures (according to the prior definition). This paint can be doped, as will be explained further on. After the marks 2 are painted on the surface of the piece (iron or steel product 1) it is common for residue 3 created by oxidation to adhere to, or be embedded in or deposited on, said surface, such as scale, swarf or stains, for example of grease or other residues of the systems, which are formed after the marks 2 are printed. These residues 3 partially or completely conceal the mark 2 traced on the surface of the product 1. In other words, the residues 3 prevent a reading by a human or conventional artificial vision of these marks 2. In the iron and steel industry, these residues 3 usually have an iron oxide content greater than 95 %, and other metals and traces of grease in smaller quantities that make these residues non-conductive due to the electronic location in the metal center which prevents the formation of conduction bands. These residues 3 can also be carbon oxide. This causes that, to a greater or lesser degree, these residues are transparent to the terahertz band, since the energy on the THZ band is much less than the width of the atomic electron transition in non-metal compounds, and therefore the incoming photons of energy in the THZ band can penetrate the non-metal compounds without being absorbed (just as vissible light passes through glass). By contrast, the energy in the THZ band does not penetrate metals or water due to the fact that the electronic structure is more compact in these compounds, with less space between the orbits of the electrons, as a consequence of which the incoming photons of energy in the THZ band are absorbed by the medium. To sum up, a detector that works in the terahertz band can detect what is behind these residues, which are transparent to the terahertz band.

The method proposed makes it possible to read the marks 2 hidden behind the residues 3, both in cold and hot temperatures, in the conditions of the process on the manufacturing line. It must be noted that typical manufacturing lines comprise furnaces at very high temperatures (up to 1200 ºC) and rolling (subjecting the hot or cold steel to pressure and other processes that generate powder, vapor, etc.). Therefore, one or more linear terahertz radiation detectors 5 are arranged. Preferably, the linear detector or detectors 5 are situated in an arrangement normal to the surface being inspected, meaning to the product 1 marked with marks 2 covered by residues 3. The distance between the surface of the product 1 being inspected and the detector 5 is preferably between 1 and 2 m, as a means of protection in hot systems. Placed between the detector (or detectors) 5 and the surface of the product 1 being inspected is a lens 6, also preferably in an arrangement normal to the surface being inspected, to concentrate the energy in the sensor (detector) 5. Moreover, one or more sources 4 of radiation in the terahertz band 4 is arranged. In one possible embodiment, the one or more sources 4 emit in the band between 300 and 1000 GHz. In other embodiments, other bands within the terahertz band may be used. The source or sources 4 are preferably situated in an arrangement between 5º and 30º with respect to the detection zone of the sensor (detector 5), in other words, with respect to the normal to the surface being inspected. Depending on the characteristics of the surface of the product 1 being inspected, said angle is adjusted within the aforementioned range (5 - 30º). Moreover, optical conditioning units 7 are arranged in front of the source or sources 4, as schematically shown in figure 2, such that the radiation emitted by these sources 4 is oriented in the most efficient way towards the line of inspection by these units 7. The radiation emitted by the source or sources 4 must be strong enough to penetrate (pass through) the material layer of the undesirable material 3 concealing the mark 2, both in the send 9 and return 10 of the signal (it must be noted that transparency implies attenuation). Lastly, when the detection is done in hot (high temperatures), arranged between the measuring and conditioning units 4, 5, 6, 7 and the product being inspected are thermal protection means 8 for protecting the units 4, 5, 6, 7 during inspection in high temperatures. In a possible embodiment, the thermal protection means 8 include equipment or devices that comprise fiber insulation, a water chamber and/or air conditioning of the clean area. In another possible embodiment, the thermal protection means 8 comprise overpressure systems on the optical surfaces to prevent heat and the concentration of water vapor (not transparent to THZ) as well as the build up of residues. These thermal protection means 8 are not necessary for cold detection. Figure 2 shows the radiation emitted 9 by the source or sources 4 (the arrow pointing at the product 1) and the radiation reflected 10 by the surface of the product 1 and by the marks traced with paint, captured by the detector 5 (arrow pointing towards the detector 5). As a person skilled in the art will understand, the number of emitting sources 4 and detectors 5, as well as the arrangement thereof, can vary as a function of the amount of surface of the product 1 that has a printed mark, drawing, character or set of characters and of the amount of surface of said product 1 covered by a residue 3, among other factors.

In embodiments of the invention, the paint used to trace the marks 2 is a commercial paint for conventional heat tracing. A non-limiting example of convention paint that can be used is the industrial paint "Paint Slab Marker", by Tebulo. For a correct detection, it is necessary that the radiation 10 in the terahertz band reflected by the paint be opaque to the terahertz band, but different from that which is emitted by the material of which the product 1 is made and on which the marks 2 are printed. The inventors have observed that, for a correct detection by means of terahertz detectors, it is necessary for the paint to have a level of absorption, transmission and reflection of terahertz waves that is different with respect to said levels of the material of the surface of the product 1 on which the marks 2 are painted. Therefore, the paint which is used to trace the marks 2 is preferably doped with a dopant (or mixture of dopants) that does not change the visible properties or the operation of said paint, but which does change its level of absorption, transmission and reflection in the terahertz band with respect to said levels of absorption of the material of the surface of the product 1 and of the material of the residues 3 that are usually deposited on said surface. In other words, the paint is doped to adjust (modulate) its transparency and increase the contrast with respect to the background. In embodiments of the invention, in which the product 1 (for example, a billet as shown in figure 1) is metal (steel, for example) or comprises metal elements, the inventors have observed that by doping the commercial paint used to trace the marks 2 with metal elements, the radiation 10 in the terahertz band reflected by the paint is different than the radiation emitted by the product 1 being analyzed, and at the same time said radiation 10 is opaque in the terahertz band (that is to say, detectable by the detector 5). In other words, the paint must be opaque, but not as opaque as the background wall (the surface of the product 1 being inspected) to be able to differentiate the radiation emitted by the paint with respect to the radiation emitted by the non-marked surface of the product 1. In a possible embodiment, the paint is doped with metal elements or compounds to adjust (modulate) the transparency of the same. In particular, the dopant can be a metal dopant that comprises iron. This way the differences of the reflection between the paint 2 and the metal background 1, of an incoming radiation 9 at frequencies in the terahertz band, which penetrates the undesirable material layer 3 that hides the mark 2 are detected.

Thus, by applying a radiation 9 in the terahertz band on the surface of the iron or steel product 1 that has an element (mark, character, etc.) 2 traced with paint and hidden behind a residue 3, this applied radiation 9 penetrates the residue 3. The at least one terahertz radiation detector 5 detects the radiation in the terahertz band reflected 10 by the surface of the iron or steel product 1 covered by the residue 3. At least one signal reflected off the surface of the product 1 and at least one signal reflected off the element 2 traced on the surface of the product 1 are thus obtained. These at least two reflected signals are processed, analyzing the differences between the at least one signal reflected off the surface of the product 1 and the at least one signal reflected off the element 2 traced on that surface.

The element 2 traced on the surface and covered at least partially by a residue 3 is thereby reconstructed. After the detection by the detector 5 (or detectors) that works in the terahertz band, software processing is applied to the signal obtained. In embodiments of the invention, enhancement filters and character recognition and classification techniques are applied to the signal, such as deep learning techniques in order to improve the recognition rate of the characters based on the quality of the image obtained.

The detection method is able to identify marks 2 traced on products 1 which are partially or completely hidden by residues 3 on the production line, that is to say, as the marked products pass through the production line at the processing speed, typically up to 10 m/s. Detection can be done both cold and hot. For hot detection, in addition to protecting the equipment, the attenuation factor introduced through water vapor present often at high temperatures must be taken into consideration.

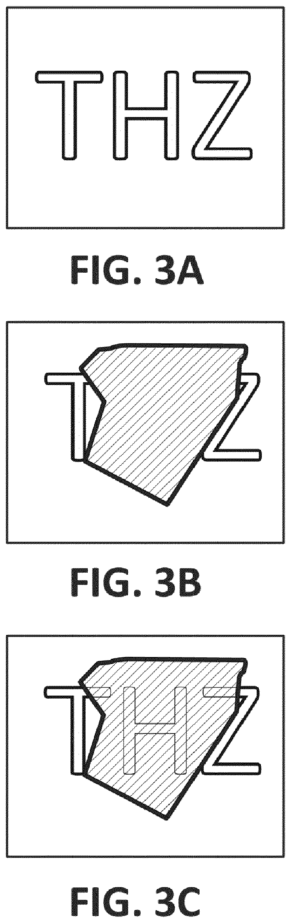

Figures 3A-3C show an example of the detection process. Figure 3A shows the surface of an iron or steel billet on which a mark formed by the characters "THZ" has been printed or drawn with hot paint doped with metal powder. Figure 3B shows the previous surface, on which a layer of residue has accumulated (scale, for example), partially hiding the characters shown in figure 3A. Lastly, figure 3C shows the result of the detection and processing carried out by executing the method of the invention. It may be observed how the hidden characters are detected by the detector 5.

The method herein described has a special application in the iron and steel industry, in which painted marks are applied, normally in hot temperatures, and which are read in both hot and cold temperatures, on pieces that are recently produced, marks that are usually partially or completely concealed due to the build up of residue, stains, etc. Likewise, the method also allows for the detection of undesirable marks, which are the result of a specific process (cracks, marks from rolling, etc.).

As can be seen, the proposal of Redo-Sanchez A. et al is not applicable to the detection and reading of characters printed on iron or steel products, since in these products a dielectric material layer (residue deposited over the mark) must be penetrated, and differences in reflection between an opaque background (the iron or steel product, typically a conductor) and printed elements on said product (the paint, which can be considered semi-dielectric with respect to the iron and steel product) must be seen. By contrast, Redo-Sanchez penetrates dielectric material layers that have printed elements. In this text, the word "comprises" and its variants (such as "comprising", etc.) should not be understood in an exclusive sense, i.e. they do not exclude the possibility of that which is described including other elements, steps, etc.

Also, the invention is not limited to the specific embodiments described herein, but rather encompasses the variations that one skilled in the art could make (e.g. in terms of choice of materials, dimensions, components, design, etc.), within the scope of what may be deduced from the claims.

## Claims

1. A method for detecting an element (2) traced on a surface of an iron or steel product (1) by means of applying a paint, wherein said element (2) has been covered at least partially by a residue (3) that prevents a human reading or a reading by conventional artificial vision of said element (2), comprising the steps of:
applying a radiation (9) in the terahertz band to said surface of an iron or steel product (1) that has an element (2) traced with paint hidden behind a residue (3), wherein said radiation (9) is emitted by at least one source (4) of radiation in the terahertz band, such that said radiation (9) passes through said residue (3);
detecting a radiation on the terahertz band reflected (10) by the surface of said iron or steel product (1) covered by said residue (3), wherein said reflected radiation (10) is detected by the at least one terahertz radiation detector (5), thereby obtaining at least one signal reflected off said surface of an iron or steel product (1) and at least one signal reflected off said element (2) traced on said surface;
processing said reflected signals, analyzing the differences between the at least one signal reflected off said surface of an iron or steel product (1) and said at least one signal reflected off said element (2) traced on said surface, and applying enhancement filters and character recognition techniques, such that the element (2) traced on said surface and at least partially covered by a residue (3) is reconstructed.

2. The method of claim 1, wherein said at least one detector (5) is arranged normal to the surface of said iron or steel product (1) and said at least one source (4) is arranged forming an angle between 5° and 30° with respect to said normal to the surface of said iron or steel product (1).

3. The method of either of the claims 1 or 2, wherein said element (2) is hot traced on the iron or steel product (1), the method preferably comprising protecting said at least one source (4) and said at least one detector (5) using thermal protection means (8).

4. The method of any of the preceding claims, wherein said element (2) is one or more characters, symbols, codes or drawings.

5. The method of any of the preceding claims, wherein said residue (3) comprises carbon oxide.

6. The method of any of claims 1-5, wherein said paint with which said element (2) is traced on the surface of an iron or steel product (1) is a paint doped with at least one dopant that does not change the visible properties or the operation of said paint, but which does change its level of absorption, transmission and reflection in the terahertz band with respect to the respective levels of absorption, transmission and reflection in the terahertz band of the surface of the iron or steel product (1) and those of said residue (3).

7. The method of claim 6, wherein said at least one dopant is metallic, said at least one metallic dopant preferably comprising iron.

8. A method for identifying iron and steel products (1), **characterized by**:
tracing an identification element (2) by means of applying a paint on a surface of an iron or steel product (1),
detecting said identification element (2) once it has been at least partially covered by a residue (3) by applying the method of any of the claims 1 to 7.

9. A detection system of an element (2) traced on a surface of an iron or steel product (1) by means of applying a paint, wherein said element (2) has been covered at least partially by a residue (3), comprising :
at least one source (4) of radiation in the terahertz band configured for applying a radiation (9) in the terahertz band on said surface of an iron or steel product (1) that has an element (2) traced with paint hidden behind a residue (3);
at least one terahertz radiation detector (5) configured for detecting a radiation in the terahertz band reflected (10) by said surface of an iron or steel product (1) covered by said residue (3), thereby obtaining at least one signal reflected off said surface of an iron or steel product (1) and at least one signal reflected off said element (2) traced on said surface;
means for processing said reflected signals, analyzing the differences between the at least one signal reflected off said surface of an iron or steel product (1) and said at least one signal reflected off said element (2) traced on said surface, and applying enhancement filters and character recognition techniques such that the element (2) traced on said surface is reconstructed.

10. The system of claim 9, wherein said at least one detector (5) is arranged normal to the surface of said iron or steel product (1), and said at least one source (4) is arranged forming an angle between 5° and 30° with respect to said normal to the surface of said iron or steel product (1).

11. The system of any of the claims 9 or 10, which further comprises thermal protection means (8) for protecting said at least one source (4) and said at least one detector (5).

12. The system of any of the claims 9 to 11, which further comprises a lens (6) arranged in front of said at least one detector (5).

13. The system of any of the claims 9 to 12, which further comprises optical conditioning units (7) in front of the at least one source (4).

14. The system of any of the claims 9 to 13, wherein said paint with which said element (2) is traced on the surface of an iron or steel product (1) is a paint doped with at least one dopant that does not change the visible properties or the operation of said paint, but which does change its level of absorption, transmission and reflection in the terahertz band with respect to the respective levels of absorption, transmission and reflection in the terahertz band of the surface of the iron or steel product (1) and those of said residue (3).

15. The system of claim 14, wherein said at least one dopant is metallic, said at least one metallic dopant preferably comprising iron.

## Patentansprüche

1. Verfahren zum Erkennen eines Elements (2), das auf einer Oberfläche eines Eisen- oder Stahlprodukts (1) durch Auftragen einer Farbe verfolgt wird, wobei das Element (2) mindestens teilweise von einem Rückstand (3) bedeckt ist, der ein menschliches Ablesen oder ein Ablesen durch herkömmliches künstliches Sehen des Elements (2) verhindert, umfassend die folgenden Schritte:
Anlegen einer Strahlung (9) im Terahertz-Band an die Oberfläche eines Eisen- oder Stahlprodukts (1), das ein Element (2) aufweist, das mit Farbe verfolgt wird, die hinter einem Rückstand (3) verdeckt ist, wobei die Strahlung (9) von mindestens einer Strahlungsquelle (4) im Terahertz-Band emittiert wird, so dass die Strahlung (9) durch den Rückstand (3) tritt;
Erkennen einer Strahlung auf dem Terahertz-Band, die von der Oberfläche des Eisen- oder Stahlprodukts (1), das von dem Rückstand (3) bedeckt ist, reflektiert (10) wird, wobei die reflektierte Strahlung (10) von dem mindestens einen Terahertz-Strahlungsdetektor (5) erkannt wird, wodurch mindestens ein Signal, das von der Oberfläche eines Eisen- oder Stahlprodukts (1) reflektiert wird, und mindestens ein Signal erhalten wird, das von dem Element (2) reflektiert wird, das auf der Oberfläche verfolgt wird;
Verarbeiten der reflektierten Signale, Analysieren der Unterschiede zwischen dem mindestens einen Signal, das von der Oberfläche eines Eisen- oder Stahlprodukts (1) reflektiert wird, und dem mindestens einen Signal, das von dem auf der Oberfläche verfolgten Element (2) reflektiert wird, und Anwenden von Verbesserungsfiltern und Zeichenerkennungstechniken, derart, dass das auf der Oberfläche verfolgte und mindestens teilweise von einem Rückstand (3) bedeckte Element (2) rekonstruiert wird.

2. Verfahren nach Anspruch 1, wobei der mindestens eine Detektor (5) senkrecht zur Oberfläche des Eisen- oder Stahlprodukts (1) angeordnet ist und die mindestens eine Quelle (4) so angeordnet ist, dass sie einen Winkel zwischen 5° und 30° in Bezug auf die Normale zur Oberfläche des Eisen- oder Stahlprodukts (1) bildet.

3. Verfahren nach einem der Ansprüche 1 oder 2, wobei das Element (2) auf dem Eisen- oder Stahlprodukt (1) heiß verfolgt wird, das Verfahren vorzugsweise das Schützen der mindestens einen Quelle (4) und des mindestens einen Detektors (5) unter Verwendung von Wärmeschutzmitteln (8) umfasst.

4. Verfahren nach einem der vorhergehenden Ansprüche, wobei das Element (2) ein oder mehrere Zeichen, Symbole, Codes oder Zeichnungen ist.

5. Verfahren nach einem der vorhergehenden Ansprüche, wobei der Rückstand (3) Kohlenoxid umfasst.

6. Verfahren nach einem der Ansprüche 1 bis 5, wobei die Farbe, mit der das Element (2) auf der Oberfläche eines Eisen- oder Stahlprodukts (1) verfolgt wird, eine Farbe ist, die mit mindestens einem Dotierstoff dotiert ist, der die sichtbaren Eigenschaften oder den Betrieb der Farbe nicht verändert, der jedoch den Absorptions-, Transmissions- und Reflexionsgrad im Terahertz-Band in Bezug auf den jeweiligen Absorptions-, Transmissions- und Reflexionsgrad im Terahertz-Band der Oberfläche des Eisen- oder Stahlprodukts (1) und des Rückstands (3) verändert.

7. Verfahren nach Anspruch 6, wobei der mindestens eine Dotierstoff metallisch ist, wobei der mindestens eine metallische Dotierstoff vorzugsweise Eisen umfasst.

8. Verfahren zum Identifizieren von Eisen- und Stahlprodukten (1), **gekennzeichnet durch**:
Verfolgen eines Identifikationselements (2) mittels Auftragen einer Farbe auf eine Oberfläche eines Eisen- oder Stahlprodukts (1),
Erkennen des Identifikationselements (2), sobald es mindestens teilweise von einem Rückstand (3) bedeckt wurde, durch Anwenden des Verfahrens nach einem der Ansprüche 1 bis 7.

9. Erkennungssystem eines Elements (2), das durch Auftragen einer Farbe auf einer Oberfläche eines Eisen- oder Stahlprodukts (1) verfolgt wird, wobei das Element (2) mindestens teilweise von einem Rückstand (3) bedeckt ist, umfassend:
mindestens eine Strahlungsquelle (4) in dem Terahertz-Band, die zum Anlegen einer Strahlung (9) im Terahertz-Band an die Oberfläche eines Eisen- oder Stahlprodukts (1) konfiguriert ist, das ein Element (2) aufweist, das mit Farbe verfolgt wird, die hinter einem Rückstand (3) verdeckt ist;
mindestens einen Terahertz-Strahlungsdetektor (5), der zum Erkennen einer Strahlung auf dem Terahertz-Band konfiguriert ist, die von der Oberfläche eines Eisen- oder Stahlprodukts (1), das von dem Rückstand (3) bedeckt ist, reflektiert (10) wird, wodurch mindestens ein Signal, das von der Oberfläche eines Eisen- oder Stahlprodukts (1) reflektiert wird, und mindestens ein Signal erhalten wird, das von dem Element (2) reflektiert wird, das auf der Oberfläche verfolgt wird;
Mittel zum Verarbeiten der reflektierten Signale, die die Unterschiede zwischen dem mindestens einen Signal, das von der Oberfläche eines Eisen- oder Stahlprodukts (1) reflektiert wird, und dem mindestens einen Signal, das von dem auf der Oberfläche verfolgten Element (2) reflektiert wird, analysieren und Verbesserungsfilter und Zeichenerkennungstechniken anwenden, sodass das Element (2), das auf der Oberfläche verfolgt wird, rekonstruiert wird.

10. System nach Anspruch 9, wobei der mindestens eine Detektor (5) senkrecht zur Oberfläche des Eisen- oder Stahlprodukts (1) angeordnet ist und die mindestens eine Quelle (4) so angeordnet ist, dass sie einen Winkel zwischen 5° und 30° in Bezug auf die Normale zur Oberfläche des Eisen- oder Stahlprodukts (1) bildet.

11. System nach einem der Ansprüche 9 oder 10, welches ferner Wärmeschutzmittel (8) zum Schutz der mindestens einen Quelle (4) und des mindestens einen Detektors (5) umfasst.

12. System nach einem der Ansprüche 9 bis 11, die ferner eine Linse (6) umfasst, die vor dem mindestens einen Detektor (5) angeordnet ist.

13. System nach einem der Ansprüche 9 bis 12, welches ferner optische Konditionierungseinheiten (7) vor der mindestens einen Quelle (4) umfasst.

14. System nach einem der Ansprüche 9 bis 13, wobei die Farbe, mit der das Element (2) auf der Oberfläche eines Eisen- oder Stahlprodukts (1) verfolgt wird, eine Farbe ist, die mit mindestens einem Dotierstoff dotiert ist, der die sichtbaren Eigenschaften oder den Betrieb der Farbe nicht verändert, der jedoch den Absorptions-, Transmissions- und Reflexionsgrad im Terahertz-Band in Bezug auf den jeweiligen Absorptions-, Transmissions- und Reflexionsgrad im Terahertz-Band der Oberfläche des Eisen- oder Stahlprodukts (1) und des Rückstands (3) verändert.

15. System nach Anspruch 14, wobei der mindestens eine Dotierstoff metallisch ist, wobei der mindestens eine metallische Dotierstoff vorzugsweise Eisen umfasst.

## Revendications

1. Procédé pour détecter un élément (2) tracé sur une surface d'un produit en fer ou en acier (1) moyennant l'application d'une peinture, dans lequel ledit élément (2) a été recouvert au moins partiellement par un résidu (3) qui empêche une lecture humaine ou une lecture par vision artificielle conventionnelle dudit élément (2), comprenant les étapes consistant à :
appliquer un rayonnement (9) dans la bande térahertz sur ladite surface d'un produit en fer ou en acier (1) qui a un élément (2) tracé avec de la peinture caché derrière un résidu (3), dans lequel ledit rayonnement (9) est émis par au moins une source (4) de rayonnement dans la bande térahertz, de telle sorte que ledit rayonnement (9) passe à travers ledit résidu (3) ;
détecter un rayonnement sur la bande térahertz réfléchi (10) par la surface dudit produit en fer ou en acier (1) recouverte par ledit résidu (3), dans lequel ledit rayonnement réfléchi (10) est détecté par l'au moins un détecteur de rayonnement térahertz (5), obtenant ainsi au moins un signal réfléchi par ladite surface d'un produit de fer ou d'acier (1) et au moins un signal réfléchi par ledit élément (2) tracé sur ladite surface ;
traiter lesdits signaux réfléchis, analyser les différences entre l'au moins un signal réfléchi sur ladite surface d'un produit en fer ou en acier (1) et ledit au moins un signal réfléchi sur ledit élément (2) tracé sur ladite surface, et appliquer des filtres d'accentuation et des techniques de reconnaissance de caractères, de sorte que l'élément (2) tracé sur ladite surface et au moins partiellement recouvert par un résidu (3) est reconstruit.

2. Procédé selon la revendication 1, dans lequel ledit au moins un détecteur (5) est agencé normal à la surface dudit produit en fer ou en acier (1) et ladite au moins une source (4) est agencée en formant un angle entre 5° et 30° par rapport à ladite normale à la surface dudit produit en fer ou en acier (1).

3. Procédé selon l'une quelconque des revendications 1 ou 2, dans lequel ledit élément (2) est tracé à chaud sur le produit en fer ou en acier (1), le procédé comprenant de préférence la protection de ladite au moins une source (4) et dudit au moins un détecteur (5) en utilisant des moyens de protection thermique (8).

4. Procédé selon l'une quelconque des revendications précédentes, dans lequel ledit élément (2) est un ou plusieurs caractères, symboles, codes ou dessins.

5. Procédé selon l'une quelconque des revendications précédentes, dans lequel ledit résidu (3) comprend de l'oxyde de carbone.

6. Procédé selon l'une quelconque des revendications 1 à 5, dans lequel ladite peinture avec laquelle ledit élément (2) est tracé sur la surface d'un produit en fer ou en acier (1) est une peinture dopée avec au moins un dopant qui ne change pas les propriétés visibles ou l'opération de ladite peinture, mais qui change son niveau d'absorption, de transmission et de réflexion dans la bande térahertz par rapport aux niveaux respectifs d'absorption, de transmission et de réflexion dans la bande térahertz de la surface du produit en fer ou en acier (1) et ceux dudit résidu (3).

7. Procédé selon la revendication 6, dans lequel ledit au moins un dopant est métallique, ledit au moins un dopant métallique comprenant de préférence du fer.

8. Procédé d'identification de produits en fer et en acier (1), **caractérisé par** :
le traçage d'un élément d'identification (2) moyennant l'application d'une peinture sur une surface d'un produit en fer ou en acier (1),
la détection dudit élément d'identification (2) une fois qu'il a été au moins partiellement recouvert par un résidu (3) en appliquant le procédé selon l'une quelconque des revendications 1 à 7.

9. Système de détection d'un élément (2) tracé sur une surface d'un produit en fer ou en acier (1) moyennant l'application d'une peinture, dans lequel ledit élément (2) a été recouvert au moins partiellement par un résidu (3), comprenant :
au moins une source (4) de rayonnement dans la bande térahertz configurée pour appliquer un rayonnement (9) dans la bande térahertz sur ladite surface d'un produit en fer ou en acier (1) qui a un élément (2) tracé avec de la peinture caché derrière un résidu (3) ;
au moins un détecteur de rayonnement térahertz (5) configuré pour détecter un rayonnement dans la bande térahertz réfléchi (10) par ladite surface d'un produit en fer ou en acier (1) recouvert par ledit résidu (3), obtenant ainsi au moins un signal réfléchi par ladite surface d'un produit de fer ou d'acier (1) et au moins un signal réfléchi par ledit élément (2) tracé sur ladite surface ;
des moyens de traitement desdits signaux réfléchis, analysant les différences entre l'au moins un signal réfléchi sur ladite surface d'un produit en fer ou en acier (1) et ledit au moins un signal réfléchi sur ledit élément (2) tracé sur ladite surface, et appliquant des filtres d'accentuation et des techniques de reconnaissance de caractères de sorte que l'élément (2) tracé sur ladite surface est reconstruit.

10. Système selon la revendication 9, dans lequel ledit au moins un détecteur (5) est agencé normal à la surface dudit produit en fer ou en acier (1), et ladite au moins une source (4) est agencée en formant un angle entre 5° et 30° par rapport à ladite normale à la surface dudit produit en fer ou en acier (1).

11. Système selon l'une quelconque des revendications 9 ou 10, qui comprend en outre des moyens de protection thermique (8) pour la protection de ladite au moins une source (4) et dudit au moins un détecteur (5).

12. Système selon l'une quelconque des revendications 9 à 11, qui comprend en outre une lentille (6) agencée devant ledit au moins un détecteur (5).

13. Système selon l'une quelconque des revendications 9 à 12, qui comprend en outre des unités de conditionnement optique (7) devant l'au moins une source (4).

14. Système selon l'une quelconque des revendications 9 à 13, dans lequel ladite peinture avec laquelle ledit élément (2) est tracé sur la surface d'un produit en fer ou en acier (1) est une peinture dopée avec au moins un dopant qui ne change pas les propriétés visibles ou l'opération de ladite peinture, mais qui change son niveau d'absorption, de transmission et de réflexion dans la bande térahertz par rapport aux niveaux respectifs d'absorption, de transmission et de réflexion dans la bande térahertz de la surface du produit en fer ou en acier (1) et ceux dudit résidu (3).

15. Système selon la revendication 14, dans lequel ledit au moins un dopant est métallique, ledit au moins un dopant métallique comprenant de préférence du fer.
